# EUROPÄISCHE PATENTANMELDUNG

(11) **EP 4 491 326 A1**
(43) Veröffentlichungstag der Anmeldung: **15.01.2025**
(21) Anmeldenummer: 24187392.6
(22) Anmeldetag: 09.07.2024
(51) Int. Cl.: B23Q 17/24

(54) **KANALBEARBEITUNGSVORRICHTUNG**

(30) Priorität: 13.07.2023 DE 102023206685
(71) Anmelder: IBAK Helmut Hunger GmbH & Co. KG, 24148 Kiel (DE)
(72) Erfinder: Behrens, Dirk, 24148 Kiel (DE); Lauther, Tim, 24148 Kiel (DE); Scheer, Paul, 24148 Kiel (DE); Gratz, Tobias, 24148 Kiel (DE)
(74) Vertreter: Patentanwälte Hemmer Lindfeld Frese Partnerschaft mbB

(57) **Zusammenfassung**

Die Erfindung betrifft eine Kanalbearbeitungsvorrichtung mit zumindest einem Bearbeitungswerkzeug (8) sowie zumindest einer beabstandet zu dem Bearbeitungswerkzeug (8) angeordneten Arbeitsbereich-Kamera (12), mit zumindest einer Werkzeug-Beleuchtungseinrichtung (14; 30; 32; 36; 40), welche einen Bearbeitungsbereich des Bearbeitungswerkzeuges (8) anleuchtet und von dem Bearbeitungswerkzeug (8) weniger weit beabstandet angeordnet ist als von der Arbeitsbereich-Kamera (12), sowie ein Kanalbearbeitungsverfahren.

## Beschreibung

Die Erfindung betrifft eine Kanalbearbeitungsvorrichtung.

Kanalbearbeitungsvorrichtungen sind beispielsweise in Form von Kanalrohr-Robotern bekannt, welche dazu eingesetzt werden, im Inneren von Kanalrohren Bearbeitungen vorzunehmen. So sind Fräsroboter bekannt, mit welchen Arbeiten an der Rohrwandung durchgeführt werden können, beispielsweise Öffnungen in eingebrachte Liner eingefräst werden können oder Ablagerungen abgetragen werden. Auch sind Werkzeuge zur Hochdruck-Wasserstrahlbearbeitung bekannt, beispielsweise um Ablagerungen oder Fremdkörper im Inneren eines Kanalrohres abtragen zu können. Derartige Bearbeitungen werden meist unter Kamerabeobachtung durchgeführt, wobei die Kamera beabstandet zu dem Werkzeug angeordnet ist, so dass der Bearbeitungsbereich und das Werkzeug durch die Kamera betrachtet werden können. Problematisch bei der Bearbeitung ist, dass große Verunreinigungen, beispielsweise Staub oder Sprühnebel entstehen, welche das Sichtfeld durch die Kamera beeinträchtigen.

Es ist Aufgabe der Erfindung, eine bessere Beobachtung während der Bearbeitung eines Kanalobjekts zu ermöglichen.

Diese Aufgabe wird gelöst durch eine Kanalbearbeitungsvorrichtung mit den in Anspruch 1 angegebenen Merkmalen sowie durch ein Kanalbearbeitungsverfahren mit den in Anspruch 13 angegebenen Merkmalen. Bevorzugte Ausführungsformen ergeben sich aus den zugehörigen Unteransprüchen, der nachfolgenden Beschreibung sowie den beigefügten Figuren.

Die erfindungsgemäße Kanalbearbeitungsvorrichtung ist dazu ausgebildet, Bearbeitungen im Inneren von Kanalobjekten durchzuführen. Derartige Kanalobjekte sind insbesondere Kanalrohre in Abwassersystemen. Die Kanalbearbeitungsvorrichtung weist zumindest ein Bearbeitungswerkzeug auf. Dabei kann es sich insbesondere um ein abtragendes Bearbeitungswerkzeug handeln, welches dazu ausgebildet ist, Material im Inneren eines Kanals bzw. Kanalrohrs abzutragen. Dies kann beispielsweise ein motorisch angetriebenes Bearbeitungswerkzeug wie ein Fräser sein. Alternativ oder zusätzlich ist auch eine Hochdruck-Wasserstrahlbearbeitung denkbar. In diesem Fall handelt es sich bei dem Bearbeitungswerkzeug um eine Austrittsdüse, welche zum Ausbringen eines Hochdruckwasserstrahls ausgebildet ist. Die Kanalbearbeitungsvorrichtung weist ferner zumindest eine Arbeitsbereich-Kamera auf, welche beabstandet zu dem Bearbeitungswerkzeug angeordnet ist. Die Arbeitsbereich-Kamera ist so angeordnet, dass das Bearbeitungswerkzeug und insbesondere ein vordem Bearbeitungswerkzeug liegender Bereich des Kanalobjektes im Blickfeld der Arbeitsbereich-Kamera liegen, so dass über das Bild der Arbeitsbereich-Kamera ein Bearbeitungsvorgang, welcher mit dem Bearbeitungswerkzeug durchgeführt wird, beobachtet werden kann. Die Arbeitsbereich-Kamera ist dazu entsprechend weit von dem Bearbeitungswerkzeug bzw. einem vor dem Bearbeitungswerkzeug liegenden Bearbeitungsbereich beabstandet, so dass mit dem gegebenen Blickwinkel der Arbeitsbereich-Kamera ein ausreichend großes Blickfeld geschaffen wird, welches vorzugsweise den gesamten Bearbeitungsbereich erfasst.

Die Kanalbearbeitungsvorrichtung weist ferner zumindest eine Werkzeug-Beleuchtungseinrichtung auf. Diese Werkzeug-Beleuchtungseinrichtung ist derart ausgestaltet, dass sie den Bearbeitungsbereich des Bearbeitungswerkzeuges, d.h. den Bereich des Kanals, in dem das Bearbeitungswerkzeug gerade eine Bearbeitung bewirkt, anleuchtet. Dies ist vorzugsweise der Bereich, welcher im Blickfeld der Arbeitsbereich-Kamera liegt. Erfindungsgemäß ist die zumindest eine Werkzeug-Beleuchtungseinrichtung von dem Bearbeitungswerkzeug weniger weit beabstandet angeordnet als die Arbeitsbereich-Kamera von dem Bearbeitungswerkzeug angeordnet ist. D.h. ein Abstand zwischen Werkzeug-Beleuchtungseinrichtung und Bearbeitungswerkzeug ist kleiner als ein Abstand zwischen Bearbeitungswerkzeug und Arbeitsbereich-Kamera, wobei der Abstand sich vorzugsweise auf den an den Arbeitsbereich angrenzenden Teil des Bearbeitungswerkzeuges bezieht, d.h. dort, wo z.B. ein Materialabtrag stattfindet. Die Werkzeug-Beleuchtungseinrichtung unterscheidet sich damit von üblichen Beleuchtungseinrichtungen, welche in unmittelbarer Umgebung der Kameralinse angeordnet sind und welche bei Kanal-Inspektionskameras üblich sind. Die von der Arbeitsbereich-Kamera beabstandete Anordnung der Werkzeug-Beleuchtungseinrichtung hat den Vorteil, dass Lichtreflektionen am auftretenden Staub oder Wassernebel, welche das Kamerabild stören, reduziert werden. So wird ein klareres, weniger durch Lichtreflektionen gestörtes Bild bei der Bearbeitung gewährleistet. Es ist besonders vorteilhaft, die Werkzeug-Beleuchtungseinrichtung möglichst nah am Bearbeitungswerkzeug zu positionieren, da so ein möglichst großer Unterschied zwischen der Abstrahlrichtung der Werkzeug-Beleuchtungseinrichtung und der Hauptblickrichtung der Arbeitsbereich-Kamera geschaffen wird. Dadurch wird eine direkte Blendung im Kamerabild stark minimiert.

Die Werkzeug-Beleuchtungseinrichtung ist von dem Bearbeitungswerkzeug weniger weit beabstandet angeordnet als von der Arbeitsbereich-Kamera, wobei dies ein Abstand in der Blickrichtung der Kamera und/oder normal zu einer Bearbeitungsachse des Bearbeitungswerkzeuges ist, wie sie unten beschrieben wird Dies ermöglicht einen großen Winkel wischen der Kamerablickrichtung und der Beleuchtungsrichtung, durch den unerwünschte Reflektionen besonders vorteilhaft vermindert werden können.

Vorzugsweise erfolgt die Beleuchtung des Bearbeitungsbereiches durch die Werkzeug-Beleuchtungseinrichtung während einer Bearbeitung derart, dass der Bereich zwischen der Arbeitsbereich-Kamera und einem von der Werkzeug-Beleuchtungseinrichtung beleuchteten Bearbeitungsbereich ohne direkte Beleuchtung ist, d.h. ein Bereich direkt vor der Kamera im Wesentlichen unbeleuchtet ist. Weiter bevorzugt erfolgt die Beleuchtung des Bearbeitungsbereiches durch die Werkzeug-Beleuchtungseinrichtung während einer Bearbeitung derart, dass der Bereich zwischen der Arbeitsbereich-Kamera und dem Bearbeitungswerkzeug ohne eine direkte Beleuchtung ist, deren Abstrahlrichtung in Blickrichtung der Arbeitsbereich-Kamera gerichtet ist. So können direkte Reflektionen an Partikeln oder Tropfen in diesem Bereich vermieden werden. Stattdessen wird zweckmäßigerweise nur der Bearbeitungsbereich in seiner unmittelbaren Umgebung aus einem anderen Winkel als die Blickrichtung der Arbeitsbereich-Kamera angeleuchtet.

Bevorzugt beträgt der Abstand, d.h. ein Abstand normal zur Bearbeitungsachse und/oder in Blickrichtung der Arbeitsbereich-Kamera, zwischen der Werkzeug-Beleuchtungseinrichtung und dem Bearbeitungswerkzeug weniger als die Hälfte des Abstandes zwischen der Arbeitsbereich-Kamera und dem Bearbeitungswerkzeug. Hierdurch wird ein entsprechend großer Abstand und damit großer Winkel zwischen den optischen Achsen von Beleuchtungseinrichtung und Arbeitsbereich-Kamera realisiert.

Die zumindest eine Werkzeug-Beleuchtungseinrichtung kann in einer möglichen Ausgestaltung als eine das Bearbeitungswerkzeug umgebende Ringleuchte ausgebildet sein oder mehrere überden Umfang des Werkzeugs verteilte Lichtquellen bzw. Lichtaustrittsbereiche aufweisen. Eine Ringleuchte erstreckt sich vorzugsweise konzentrisch beabstandet im Wesentlichen um den gesamten Umfang des Bearbeitungswerkzeugs. Die mehreren Lichtquellen oder Lichtaustrittsbereiche sind vorzugsweise gleichmäßig über den Umfang des Bearbeitungswerkzeuges verteilt angeordnet, so dass der Arbeitsbereich in der Umgebung des Bearbeitungswerkzeuges vorzugsweise gleichmäßig ausgeleuchtet wird. Eine Ringleuchte kann durch einen ringförmigen Lichtaustrittsbereich definiert sein. Ein solcher kann eine ringförmige Lichtquelle aufweisen oder alternativ kann der ringförmige Lichtaustrittsbereich durch geeignete Lichtleiter, welche in lichtleitender Verbindung mit einer oder mehreren Lichtquellen sind, gebildet werden.

Bei einer Ausführungsform, bei welcher die Werkzeug-Beleuchtungseinrichtung mehrere Lichtquellen aufweist, sind diese bevorzugt gleichmäßig über den Umfang des Bearbeitungswerkzeuges verteilt angeordnet. Beispielsweise können vier Lichtquellen vorgesehen sein. Die vier Lichtquellen können in einer rechteckigen oder vorzugsweise quadratischen Anordnung positioniert sein, bei welcher sie die Ecken eines Rechteckes oder Quadrats definieren. Bevorzugt ist die Anordnung der mehreren Lichtquellen so gelegen, dass im Zentrum der Anordnung die Bearbeitungsachse, vorzugsweise Drehachse des Bearbeitungswerkzeuges gelegen ist. So kann eine gleichmäßige Ausleuchtung des Bearbeitungsbereiches von mehreren Seiten aus erfolgen. Bei der beschriebenen Anordnung der Lichtquellen können die eigentlichen Lichtquellen selber entsprechend positioniert sein oder es können die den Lichtquellen zugeordneten Lichtaustrittsflächen in der vorangehend beschriebenen Weise positioniert sein. Die Lichtquellen können beabstandet zu den Lichtaustrittsflächen und über Lichtleiter mit diesen verbunden sein.

Bei einer Ausgestaltung, bei der die Werkzeug-Beleuchtungseinrichtung mehrere gleichmäßig über den Umfang des Bearbeitungswerkezuges verteilte Lichtquellen oder Lichtaustrittsflächen von Lichtquellen aufweist, sind in einer speziellen Ausführungsform die einzelnen Lichtquellen einzeln oder in mehreren Gruppen steuerbar und vorzugsweise in ihrer Helligkeit steuerbar. Die Steuerung der Helligkeit beinhaltet dabei vorzugsweise auch ein Ein- und Ausschalten. Alternativ oder zusätzlich zur Steuerung der Helligkeit, können auch andere Eigenschaften gesteuert werden, beispielsweise Abstrahlrichtung und/oder Lichtfarbe. Dies kann über eine Steuereinrichtung geschehen, wie sie weiter unten beschrieben werden wird. Die einzelnen oder gruppenweise Ansteuerungen der Lichtquellen hat den Vorteil, dass beispielsweise die Lichtquellen, welche näher zu der Arbeitsbereich-Kamera gelegen sind, gedimmt oder ausgeschaltet werden können, um eine Blendung der Arbeitsbereich-Kamera zu minimieren.

Das Bearbeitungswerkzeug kann in einer bevorzugten Ausgestaltung an einem Werkzeugträger angeordnet sein, der mit der Vorschubeinrichtung über eine Positioniereinrichtung verbunden ist. Die Positioniereinrichtung kann so ausgestaltet sein, dass sie bevorzugt eine Positionierung des Werkzeugträgers in einer Richtung quer zur Vorschubachse der Vorschubeinrichtung ermöglicht. Dies ermöglicht es beispielsweise den Werkzeugträger mit dem Bearbeitungswerkzeug anzuheben, um in einem Kanalrohr die Kanalrohroberseite zu erreichen, während die Vorschubeinrichtung am Boden des Kanalrohres steht. Die Positioniereinrichtung kann ferner drehbar sein, vorzugsweise um die Vorschubachse der Vorschubeinrichtung, um alle Umfangsbereiche einer Kanalrohrwandung mit dem Bearbeitungswerkzeug erreichen zu können. Die Arbeitsbereich-Kamera ist vorzugsweise schwenkbar oder weist einen Schwenkkopf auf, an dem das Kameraobjektiv gelegen ist, so dass die Blickrichtung der Arbeitsbereich-Kamera geändert werden kann, um je nach Positionierung des Werkzeugträgers mit den Bearbeitungswerkzeug den Bearbeitungsbereich in den Blick nehmen zu können. Alternativ oder zusätzlich kann die Arbeitsbereich-Kamera derart an der Positioniereinrichtung angebracht sein, dass sie mit dem Werkzeugträger gemeinsam bewegt wird, sodass das Blickfeld auf der Arbeitsbereich-Kamera gerichtet bleibt.

In einer weiteren möglichen Ausgestaltung der Erfindung ist die Werkzeug-Beleuchtungseinrichtung oder sind Lichtquellen oder Lichtaustrittsflächen der Werkzeug-Beleuchtungseinrichtung an einer sich quer zu einer Bearbeitungsachse des Bearbeitungswerkzeuges erstreckenden Oberfläche des Werkzeugträgers angeordnet. Bevorzugt ist dies eine Oberfläche, welche dem Bearbeitungswerkzeug zugewandt ist, sodass die Beleuchtungseinrichtung von dieser Oberfläche aus das Bearbeitungswerkzeug und den Bearbeitungsbereich ausleuchten kann. Die Anordnung der Werkzeug-Beleuchtungseinrichtung an einer solchen Oberfläche des Werkzeugträgers ermöglicht es, die Lichtaustrittsfläche bzw. Lichtquellen in direkter Nähe des Bearbeitungswerkzeuges anzuordnen.

Die Werkzeug-Beleuchtungseinrichtung kann so ausgebildet sein, dass ihre Lichtaustrittsflächen im Wesentlichen quer zu der Richtung der Bearbeitungsachse gerichtet sind. In einer alternativen Ausführungsform kann die Werkzeug-Beleuchtungseinrichtung zumindest eine Lichtaustrittsfläche aufweisen, welche der Bearbeitungsachse zugewandt ist. Daraus kann sich eine zu der Bearbeitungsachse gewinkelte Hauptabstrahlrichtung ergeben, allerdings muss die Hautabstrahlrichtung nicht normal zu der Lichtaustrittsfläche verlaufen. Die gewinkelte bzw. schräge Lichtaustrittsfläche ermöglicht eine gegenüber der Horizontalen gewinkelte Oberfläche, was eine Schmutzablagerung an der Oberfläche verhindert. Insbesondere kann Wasser von der Oberfläche abfließen und Verunreinigungen wegspülen.

Gemäß einer weiteren bevorzugten Ausgestaltung der Werkzeug-Beleuchtungseinrichtung weist diese zumindest eine Lichtaustrittsfläche auf, welche frei von einer über die Oberfläche der Lichtsautrittsfläche auskragenden Einfassung ist. D.h. die Lichtaustrittsfläche ist rahmenlos ausgebildet. Dadurch, dass auf diese Weise keine Umrandung der Lichtaustrittsfläche gegeben ist, wird erreicht, dass Staub oder Partikel, welche bei der Bearbeitung entstehen, von der Lichtaustrittsfläche leichter abgespült werden können, da sie sich nicht an einem Rahmen oder einer Umrandung ansammeln können. Weiter bevorzugt können die Lichtaustrittsflächen gegenüber den umgebenden Flächen erhaben angeordnet sein.

Gemäß einer weiteren bevorzugten Ausgestaltung ist die Blickrichtung der zumindest einen Arbeitsbereich-Kamera gegenüber einer Hauptabstrahlrichtung der Werkzeug-Beleuchtungseinrichtung gewinkelt, vorzugsweise in einem Winkel zwischen 30° und 90°, weiter bevorzugt zwischen 45° und 90°. Die Hauptabstrahlrichtung der Werkzeug-Beleuchtungseinrichtung wird dabei durch die zentrale Achse des abgestrahlten Lichtbündels bzw. Lichtkegels definiert. Entsprechend ist die Blickrichtung der Arbeitsbereich-Kamera die optische Achse, das heißt die zentrale Achse des Blickfeldes der Arbeitsbereich-Kamera. Durch die unterschiedlichen Winkel der Hauptabstrahlrichtung und der Blickrichtung werden Reflektionen an Partikeln und Wassertropfen, welche direkt in Blickrichtung der Kamera gerichtet sind, minimiert, so dass insgesamt ein weniger gestörtes Kamerabild realisiert wird. Ein maximaler Abstrahlwinkel der Werkzeug-Beleuchtungseinrichtung zu deren Hauptabstrahlrichtung ist vorzugsweise kleiner als 45°, so dass ein Gesamtabstrahlwinkel kleiner 90° realisiert wird.

Das Bearbeitungswerkzeug kann gemäß einer möglichen Ausführungsform ein Fräser sein, welcher drehend angetrieben ist, beispielsweise durch einen Elektromotor oder einen hydraulischen oder pneumatischen Motor. Die Drehachse des Fräsers definiert eine Bearbeitungsachse. Es können jedoch auch andere Bearbeitungswerkzeuge vorgesehen sein, z.B. eine Hochdruckdüse, aus der ein Hochdruck-Wasserstrahl zur Bearbeitung einer Kanalwandung oder zum Abtrag von Ablagerungen austritt.

Gemäß einer weiteren bevorzugten Ausgestaltung ist die zumindest eine Werkzeug-Beleuchtungseinrichtung im Umfangsbereich der Bearbeitungsachse angeordnet. Dabei kann die Werkzeug-Beleuchtungseinrichtung bzw. ein Lichtaustrittsbereich auch nur in einem oder mehreren beschränkten Winkelbereichen des Umfangs um die Bearbeitungsachse gelegen sein. So können z.B. in der oben beschriebenen Weise mehrere Lichtquellen über den Umfang verteilt angeordnet sein. Alternativ kann die Werkzeug-Beleuchtungseinrichtung auch so ausgebildet sein, dass Lichtaustrittsbereiche vollumfänglich um die Bearbeitungsachse verteilt angeordnet sind. Die Werkzeug-Beleuchtungseinrichtung liegt vorzugsweise an einer Außenseite der Kanalbearbeitungsvorrichtung, an welcher das Bearbeitungswerkzeug gelegen ist, beispielsweise der Außenseite, aus welcher die Drehachse eines Fräsers austritt.

Die im Umfangsbereich der Bearbeitungsachse angeordnete Werkzeug-Beleuchtungseinrichtung ist gemäß einer weiteren möglichen Ausgestaltung der Erfindung weniger als 15cm, weiter bevorzugt weniger als 10cm von der Bearbeitungsachse in radialer Richtung beabstandet. So wird die Werkzeug-Beleuchtungseinrichtung sehr nah am Bearbeitungswerkzeug positioniert.

Gemäß einer weiteren bevorzugten Ausführungsform weist die Werkzeug-Beleuchtungseinrichtung eine Hauptabstrahlrichtung auf, deren Winkel zu der Bearbeitungsachse kleiner als 45° ist. Gemäß einer besonderen Ausgestaltung der Erfindung kann die Hauptabstrahlrichtung im Wesentlichen parallel zu der Bearbeitungsachse verlaufen. Wenn die Hauptabstrahlrichtung gewinkelt zu der Bearbeitungsachse ausgerichtet ist, so ist der Winkel vorzugsweise so gelegen, dass sich die Achse der Hauptabstrahlrichtung in ihrer Abstrahlrichtung der Bearbeitungsachse annähert. Dieser Winkel ist vorzugsweise kleiner als der Winkel zwischen der Bearbeitungsachse und der Blickrichtung der Arbeitsbereich-Kamera, so dass Licht vorzugsweise im Wesentlichen nicht direkt in die Blickrichtung der Arbeitsbereich-Kamera reflektiert wird.

Gemäß einer weiteren möglichen Ausgestaltung der Erfindung ist die Blickrichtung der Arbeitsbereich-Kamera gewinkelt zu der Bearbeitungsachse, vorzugsweise in einem Winkel zwischen 45 und 90°, weiter bevorzugt zwischen 60° und 90°. Das heißt, die Kamera blickt vorzugsweise aus einem Abstand seitlich auf das Bearbeitungswerkzeug und den Bearbeitungsbereich. In Kombination mit einer Hauptabstrahlrichtung der Werkzeug-Beleuchtungseinrichtung in einem Winkel kleiner 45°, vorzugsweise parallel zur Bearbeitungsachse, wie es vorangehend beschrieben wurde, ergibt sich somit ein entsprechend großer Winkel zwischen der Hauptabstrahlrichtung der Werkzeug-Beleuchtungseinrichtung und der Blickrichtung der Arbeitsbereich-Kamera.

Bevorzugt ist der Winkel zwischen der Hauptabstrahlrichtung der Werkzeug-Beleuchtungseinrichtung und der Bearbeitungsachse kleiner als der Winkel zwischen der Bearbeitungsachse und der Blickrichtung der Arbeitsbereich-Kamera. Auf diese Weise werden Reflektionen an Partikeln oder Tropfen, welche direkt in die Blickrichtung der Kamera gerichtet sind, minimiert, so dass die Blendungen im Kamerabild verringert werden. Vorzugsweise beträgt der Winkel zwischen der Hauptabstrahlrichtung der Werkzeug-Beleuchtungseinrichtung und der Bearbeitungsachse weniger als die Hälfte des Winkels zwischen der Bearbeitungsachse und der Blickrichtung der Arbeitsbereich-Kamera.

Das Bearbeitungswerkzeug ist bevorzugt an einem Werkzeugträger angeordnet und die Werkzeug-Beleuchtungseinrichtung ist ebenfalls an diesem Werkzeugträger angeordnet. Dabei kann die Werkzeugbeleuchtungseinrichtung beispielsweise an einer Oberfläche des Werkzeugträgers angeordnet werden, in welcher das Bearbeitungswerkzeug gelegen ist oder von der ausgehend sich das Bearbeitungswerkzeug, beispielsweise ein Fräser, wegerstreckt. Wenn der Werkzeugträger beweglich bzw. positionierbar angeordnet ist, wird die Werkzeug-Beleuchtungseinrichtung so bevorzugt gemeinsam mit dem Bearbeitungswerkzeug bewegt oder positioniert. Die Position der Werkzeug-Beleuchtungseinrichtung zu dem Bearbeitungswerkzeug bleibt dabei vorzugsweise unverändert.

In dem Werkzeugträger kann ein Antrieb für das Bearbeitungswerkzeug angeordnet sein, beispielsweise ein elektrischer, hydraulischer oder pneumatischer Antriebsmotor zum Antrieb eines rotierenden Fräsers.

Gemäß einer weiteren möglichen Ausgestaltung kann die Werkzeug-Beleuchtungseinrichtung mit Reinigungsmitteln bzw. einer Reinigungseinrichtung versehen sein, durch welche die Lichtaustrittsfläche oder Lichtaustrittsflächen sauber gehalten werden. Dies können zum Beispiel Luft- oder Wasserdüsen sein, die so ausgerichtet sind, dass die Lichtaustrittsflächen durch Luft- und/oder Wasserstrom gereinigt werden können. Auch könnte eine Vibrationseinrichtung vorhanden sein, durch welche eine Lichtaustrittsfläche in Vibration versetzt wird, um Verunreinigungen zu lösen und abzurütteln.

Gemäß einer weiteren bevorzugten Ausführungsform weist die Kanalbearbeitungsvorrichtung eine Steuereinrichtung auf, welche mit der Werkzeug-Beleuchtungseinrichtung zu deren Steuerung verbunden ist. Dies kann eine spezielle Beleuchtungs-Steuereinrichtung sein oder eine Steuereinrichtung, welche auch weitere Steuerungsfunktionen der Kanalbearbeitungsvorrichtung übernimmt. Die Steuereinrichtung und die Werkzeug-Beleuchtungseinrichtung sind vorzugsweise derart ausgestaltet, dass die Werkzeug-Beleuchtungseinrichtung von der Steuereinrichtung als Ganzes oder gruppenweise bzw. abschnittsweise in ihrer Helligkeit einstellbar und/oder ein- und ausschaltbar ist, z.B. in der oben beschriebenen Weise. Durch die Helligkeitsregulierung bzw. Helligkeitsanpassung kann die Ausleuchtung im Einzelfall eingestellt und optimiert werden. Ein abschnittsweises Einstellen oder abschnittsweises Einschalten kann beispielsweise das Einschalten oder Einstellen der Werkzeug-Beleuchtungseinrichtung in verschiedenen Umfangsbereichen des Bearbeitungswerkzeuges bzw. dessen Bearbeitungsachse ermöglichen. So können beispielsweise Leuchtmittel, die den Raum zwischen Bearbeitungswerkzeug und Arbeitsbereich-Kamera beleuchten, während der Bearbeitung abgeschaltet werden. Auch dadurch kann die Beleuchtung im Einzelfall an den Einsatzzweck angepasst werden, um das Bild bei der Beobachtung zu optimieren.

Gemäß einer weiteren möglichen Ausführungsform kann eine Steuereinrichtung vorhanden sein, welche zum Steuern der Belichtungseinstellungen der Arbeitsbereich-Kamera ausgebildet ist, beispielsweise Blenden- bzw. Shuttereinstellungen an die Beleuchtung und insbesondere die Beleuchtung durch die Werkzeug-Beleuchtungseinrichtung anpasst. Diese kann automatisch erfolgen und/oder eine manuelle Einstellbarkeit bieten. Diese Steuereinrichtung kann weiter bevorzugt gleichzeitig die Werkzeug-Beleuchtungseinrichtung steuern, wie es vorangehend beschrieben wurde.

Die Kanalbearbeitungsvorrichtung weist vorzugsweise eine Vorschubvorrichtung, beispielsweise einen Fahrwagen auf, welche die zumindest eine Arbeitsbereich-Kamera sowie das zumindest eine Bearbeitungswerkzeug trägt. Die Arbeitsbereich-Kamera kann dabei eine ohnehin an einem Fahrwagen angeordnete Kamera oder eine spezielle an dem Fahrwagen montierte Kamera sein. Die Kamera kann eine eigene Kamera-Beleuchtungseinrichtung aufweisen, welche jedoch vorzugsweise abschaltbar ist, beispielsweise über eine Steuereinrichtung der Kanalbearbeitungsvorrichtung. So kann, wenn keine Bearbeitung stattfindet, die Ausleuchtung des Kanalobjektes über eine Kamera-Beleuchtungseinrichtung erfolgen, deren Abstrahlrichtung im Wesentlichen in Blickrichtung der Arbeitsbereich-Kamera gerichtet ist. Während der Bearbeitung kann dann diese Kamera-Beleuchtungseinrichtung abgeschaltet werden und stattdessen die beschriebene Werkzeug-Beleuchtungseinrichtung eingeschaltet werden.

Neben der beschriebenen Kanalbearbeitungsvorrichtung ist Gegenstand der Erfindung ein Kanalbearbeitungsverfahren, welches bevorzugt mit einer Kanalbearbeitungsvorrichtung gemäß der vorangehenden Ansprüche durchgeführt wird. Vorangehend für die Kanalbearbeitungsvorrichtung beschriebene bevorzugte Ausgestaltungen sind ebenfalls als bevorzugte Ausgestaltungen des Kanalbearbeitungsverfahrens anzusehen, und umgekehrt.

Gemäß dem Kanalbearbeitungsverfahren wird mit einem Bearbeitungswerkzeug eine Bearbeitung im Inneren eines Kanalobjektes, beispielsweise eines Kanalrohres unter Kamerabeobachtung durchgeführt. Dabei wird während der Bearbeitung ein Bearbeitungsbereich des Bearbeitungswerkzeuges durch eine Werkzeug-Beleuchtungseinrichtung beleuchtet, wobei diese Werkzeug-Beleuchtungseinrichtung weniger weit entfernt von dem Bearbeitungswerkzeug positioniert ist als von einer Arbeitsbereich-Kamera mit der die Bearbeitung bzw. der Arbeitsbereich beobachtet wird. Bei der Bearbeitung ist damit der Abstand der Werkzeug-Beleuchtungseinrichtung von dem Bearbeitungswerkzeug kleiner als ein Abstand zwischen der Arbeitsbereich-Kamera und der Werkzeug-Beleuchtungseinrichtung. Dabei ist dies ein Abstand in der Blickrichtung der Kamera und/oder normal zu einer Bearbeitungsachse des Bearbeitungswerkzeuges. Durch eine solche Beleuchtungsanordnung werden, wie oben beschrieben, unerwünschte Reflektionen an Staubpartikeln oder Wassertropfen, welche das Kamerabild stören würden, minimiert.

Gemäß einer besonderen Ausgestaltung des Kanalbearbeitungsverfahrens wird der Bearbeitungsbereich bei der Bearbeitung durch zumindest eine Werkzeug-Beleuchtungseinrichtung beleuchtet, welche als eine Ringleuchte ausgebildet ist, welche das Bearbeitungswerkzeug umgibt. Alternativ können mehrere über den Umfang des Bearbeitungswerkzeuges verteilte Lichtquellen oder Lichtaustrittsflächen verwendet werden, um das Bearbeitungswerkzeug und dessen Bearbeitungsbereich von mehreren Seiten zu beleuchten, wie es oben beschrieben wurde.

Vorzugsweise kann so bei der Bearbeitung ein Bereich zwischen der Arbeitsbereich-Kamera und dem Bearbeitungswerkzeug zumindest in der Blickrichtung der Arbeitsbereich-Kamera im Wesentlichen unbeleuchtet bleiben. Abstrahlrichtungen und Blickrichtungen sowie Abstände werden vorzugsweise so gewählt, wie sie oben anhand der Kanalbearbeitungsvorrichtung beschrieben wurden.

Alternativ oder zusätzlich ist die Blickrichtung, in welcher die Bearbeitung, d.h. der Arbeits-Bearbeitungsbereich mittels der Kamera beobachtet wird, gegenüber einer Hauptabstrahlrichtung, in der der Bearbeitungsbereich durch die Werkzeug-Beleuchtungseinrichtung beleuchtet wird, gewinkelt, vorzugsweise in einem Winkel zwischen 30° und 90°, weiter bevorzugt zwischen 45° und 90°. Durch diese Ausgestaltung werden unerwünschte Reflektionen besonders gut minimiert.

Nachfolgend wird die Erfindung beispielhaft anhand der beigefügten Figuren beschrieben. In diesen zeigt:
- Figur 1: eine erfindungsgemäße Kanalbearbeitungsvorrichtung,
- Figur 2: eine vergrößerte Ansicht des vorderen Endes der Kanalbearbeitungsvorrichtung gemäß Figur 1,
- Figur 3: eine vergrößerte Ansicht des Werkzeugträgers der Kanalbearbeitungsvorrichtung gemäß Figuren 1 und 2,
- Figur 4: schematisch in einer Seitenansicht den vorderen Teil der Kanalbearbeitungsvorrichtung gemäß Figuren 1 bis 3 im Inneren eines Kanalrohres,
- Figur 5: vergrößert die Seitenansicht des Werkzeugträgers gemäß Figur 4,
- Figur 6: in perspektivischer Ansicht einen Werkzeugträger mit einer zweiten Ausgestaltung einer Werkzeug-Beleuchtungseinrichtung,
- Figur 7: den Werkzeugträger mit der Werkzeug-Beleuchtungseinrichtung gemäß Figur 6 in einer Seitenansicht,
- Figur 8: einen Werkzeugträger gemäß einer dritten Ausführungsform in perspektivischer Ansicht,
- Figur 9: den Werkzeugträger gemäß Figur 8 in einer Draufsicht, und
- Figur 10: den Werkzeugträger gemäß Figur 8 in einer Seitenansicht..

Die in den Beispielen gezeigte Kanalbearbeitungsvorrichtung weist einen Fahrwagen 2 auf, an dessen vorderen Ende über eine Positioniereinrichtung 4 ein Werkzeugträger 6 befestigt ist. Die Positioniereinrichtung 4 ist als Hubsystem ausgebildet, mit welchem der Werkzeugträger 6 über ein Parallelogrammsystem nach oben bewegt werden kann. Gleichzeitig ist die Positioniereinrichtung 4 an dem Fahrwagen 2 um die Vorschubachse X drehbar. Der Werkzeugträger 6 beinhaltet in diesem Beispiel einen elektrischen Antriebsmotor, welcher einen Fräser 8 drehend antreibt. Es könnte entsprechend auch ein anderer Antriebsmotor, wie zum Beispiel ein pneumatischer oder hydraulischer Antriebsmotor Verwendung finden. Der Fräser 8 steht von einer Außenseite des Werkzeugträgers 6 nach außen vor, d.h. die Drehachse bzw. Bearbeitungsachse B des Trägers erstreckt sich normal zu einer Außenseite 10 des Werkzeugträgers 6. Der Werkzeugträger 6 mit dem Fräser 8 ist in Richtung der Vorschubachse X vom vorderen Ende des Fahrwagens 2 durch die Positioniereinrichtung 4 beabstandet. Am vorderen Ende des Fahrwagens 2, d.h. dem in Vorschubrichtung X hinteren Ende der Positioniereinrichtung 4, ist eine als Schwenkkopfkamera ausgebildete Arbeitsbereich-Kamera 12 angeordnet. Die Arbeitsbereich-Kamera 12 ist so angeordnet, dass ihre Blickrichtung S auf einen Arbeitsbereich vor dem Fräser 8 gerichtet ist. Durch Verschwenken des Schwenkkopfes der Arbeitsbereich-Kamera 12 kann die Blickrichtung S in gewünschter Weise ausgerichtet werden. Die Arbeitsbereich-Kamera 12 kann als übliche Kanalrohr-Inspektionskamera ausgebildet sein.

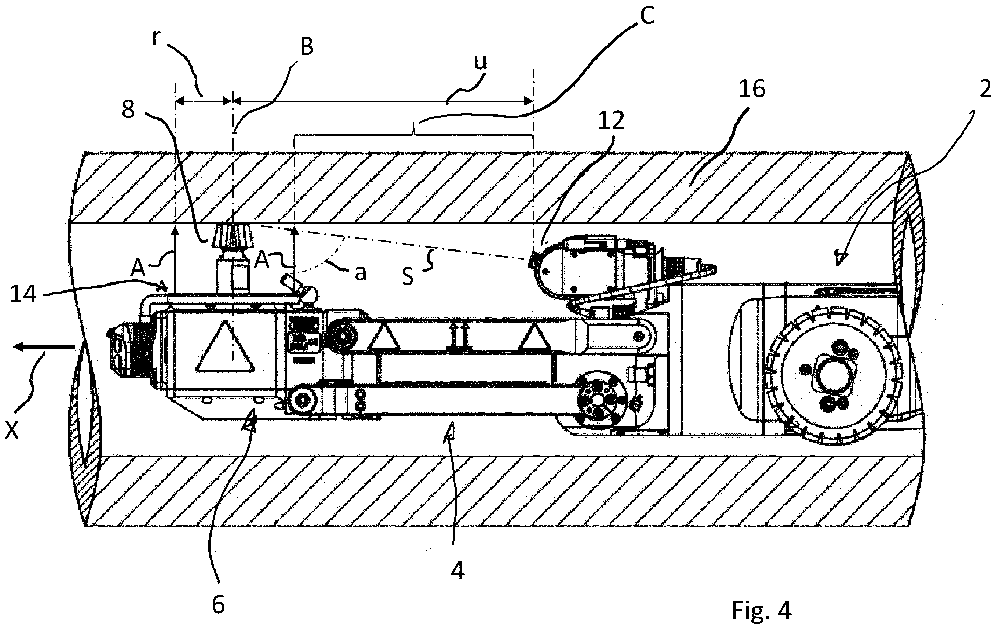

Den Fräser 8 umgebend ist in diesem Ausführungsbeispiel eine Ringleuchte 14 angeordnet, welche eine Werkzeug-Beleuchtungseinrichtung bildet. Die Ringleuchte 14 erstreckt sich konzentrisch zu der Bearbeitungsachse B des Fräsers 8. Die Ringleuchte 14 ist an der Außenseite 10 des Werkzeugträgers 6 befestigt. Die Ringleuchte 14 hat eine Hauptabstrahlrichtung A, welche im Wesentlichen die Form eines Kreiszylinders hat, der sich konzentrisch um die Bearbeitungsachse B erstreckt. Dabei ist zu verstehen, dass sich ein aus der Ringleuchte 14 in Richtung der Hauptabstrahlrichtung A austretendes Strahlenbündel ausgehend von der Ringleuchte 14 in einem Winkel b aufweitet. So definiert die Hauptabstrahlrichtung A im Wesentlichen die Mittelachse des jeweiligen Strahlenbündels. Der Abstand der Ringleuchte 14 von der Bearbeitungsachse B, d.h. von dem Fräser 8 ist in diesem Fall im Wesentlichen durch den Radius r der Ringleuchte 14 definiert. Wie am besten in Figur 4 zu erkennen ist, welche die Kanalbearbeitungsvorrichtung im Inneren eines Kanalrohrs 16 zeigt, ist der Abstand r der Ringleuchte 14 von dem Fräser 8 bzw. dessen Bearbeitungsachse B wesentlich kleiner als der Abstand u zwischen dem Fräser8 und der Arbeitsbereich-Kamera 12. Dies gilt in diesem Beispiel sowohl in der Blickrichtung S als auch in einer Richtung normal zu der Bearbeitungsachse B. Durch diese Abstände wird erreicht, dass die Hauptabstrahlrichtung A der Ringleuchte 14 in Richtung der Vorschubachse X im Wesentlichen radial auf die Innenwandung des Kanalrohrs 16 gerichtet ist. Die Blickrichtung S der Arbeitsbereich-Kamera 12 verläuft hingegen in einem spitzen Winkel zur Innenwandung des Kanalrohrs 16. So wird ein Winkel a zwischen der Hauptabstrahlrichtung A der Ringleuchte 14 und der Blickrichtung S der Arbeitsbereich-Kamera 12 realisiert, welcher kleiner als 90° ist.

Die Ringleuchte 14 hat einen Abstrahlwinkel b, in welchem sich die Strahlen bezüglich der Hauptabstrahlrichtung A ausgehend von der Ringleuchte 14 erstrecken bzw. aufweiten. Die Randstrahlen A_{R} von der Ringleuchte 14 abgestrahlten Lichtes haben somit gegenüber Blickrichtung S einen etwas größeren Winkel, welche der Summe des Abstrahlwinkels b und des Winkels a zwischen der Hauptabstrahlrichtung A und der Blickrichtung S entspricht. Dieser Winkel ist geringfügig größer als 90°, vorzugsweise jedoch kleiner als 135°.

Durch die gezeigte Beleuchtungsanordnung wird erreicht, dass Licht, welches in der Hauptabstrahlrichtung A und im spitzen Winkel b zu der Hauptabstrahlrichtung A aus der Ringleuchte 14 austritt und auf Partikel oder Wassertropfen trifft, im Wesentlichen nicht in der Blickrichtung S reflektiert wird, sodass Blendungen im Bild der Arbeitsbereich-Kamera 12 verringert werden.

In diesem Ausführungsbeispiel ist am vorderen Ende, d.h. in Vorschubrichtung X vorderen Ende des Werkzeugträgers 6 darüber hinaus noch eine zweite Kamera 18 angeordnet, welche als Vorschubkamera in der Vorschubrichtung nach vorne blickt. Die Ringleuchte 14 ist an der zweiten Kamera 18 angeschlossen, sie wird über diese angesteuert und ein- und ausgeschaltet. Sie könnte jedoch auch in anderer Weise angeschlossen und gesteuert sein. Die zweite Kamera 18 weist weitere Beleuchtungseinrichtungen 20 auf, welche eingeschaltet werden, wenn der Fahrwagen 2 vorwärts bewegt wird, um mit der zweiten Kamera 18 voraus in das Kanalrohr zu blicken. Bei der Bearbeitung mit Hilfe des Fräsers 8 können diese Beleuchtungseinrichtungen 20 von einer Steuereinrichtung abgeschaltet werden und dann die Ringleuchte 14 eingeschaltet werden, um den Arbeitsbereich des Fräsers 8 auszuleuchten.

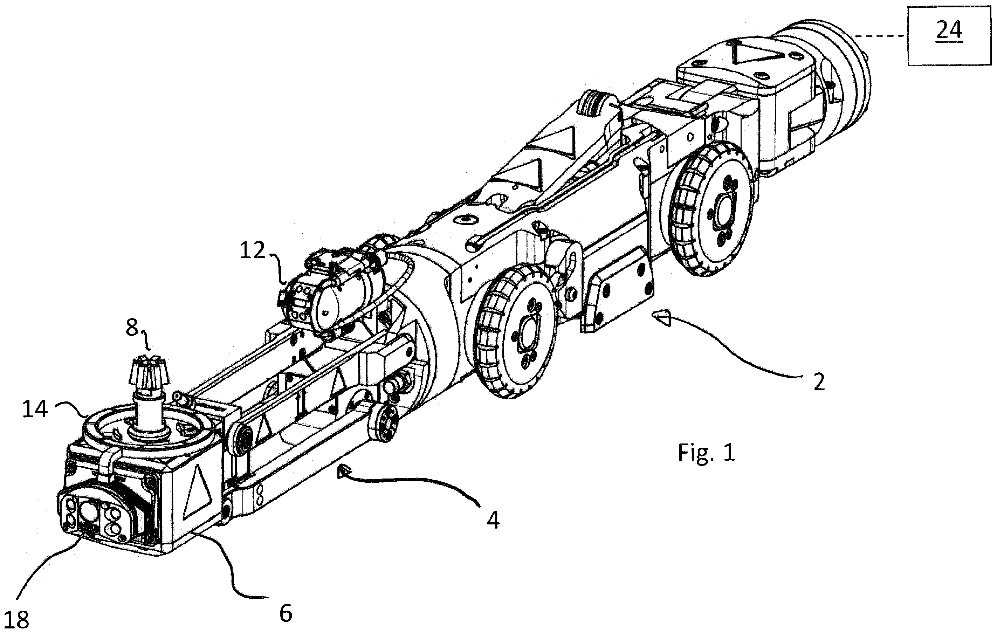

In diesem Ausführungsbeispiel weist auch die Arbeitsbereich-Kamera 12 eine Kamera-Beleuchtungseinrichtung 22 auf, welche zum Ausleuchten des Kamerabildes genutzt werden kann, solange der Fräser 8 keine Bearbeitung durchführt. Während der Bearbeitung wird die Kamera-Beleuchtungseinrichtung 22 bevorzugt ausgeschaltet, sodass lediglich die Ringleuchte 14 als Lichtquelle für den Arbeitsbereich dient. So werden Blendungen im Kamerabild der Arbeitsbereich-Kamera 12 vermieden. Die Steuerung der verschiedenen Lichtquellen, d.h. der Ringleuchte 14, der Beleuchtungseinrichtung 20 und der Kamerabeleuchtungseinrichtung 22 erfolgt über eine Steuereinrichtung 24, welche in den Fahrwagen 2 integriert sein kann oder extern angeordnet und mit diesem kommunikationsverbunden sein kann, wie schematisch in Figur 1 gezeigt. Die Steuereinrichtung 24 kann eine Gesamt-Steuereinrichtung sein, welche die gesamte Kanalbearbeitungsvorrichtung, d.h. auch den Fräser8, steuert. Die Steuereinrichtung 24 kann darüber hinaus auch die Arbeitsbereich-Kamera 12 steuern, beispielsweise Blenden- oder Shutter-Einstellungen der Kamera 12 steuern und insbesondere an die Beleuchtung der Werkzeug-Beleuchtungseinrichtung 14 anpassen.

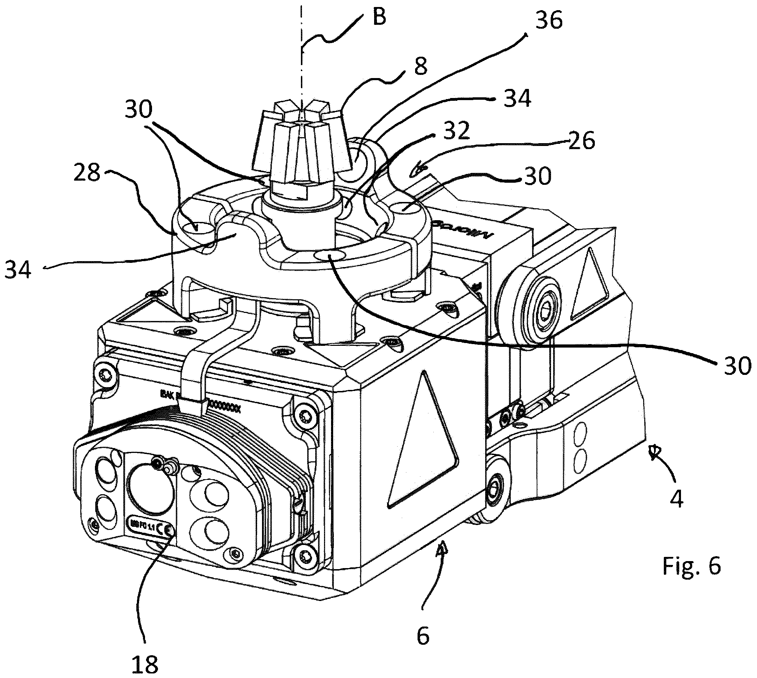

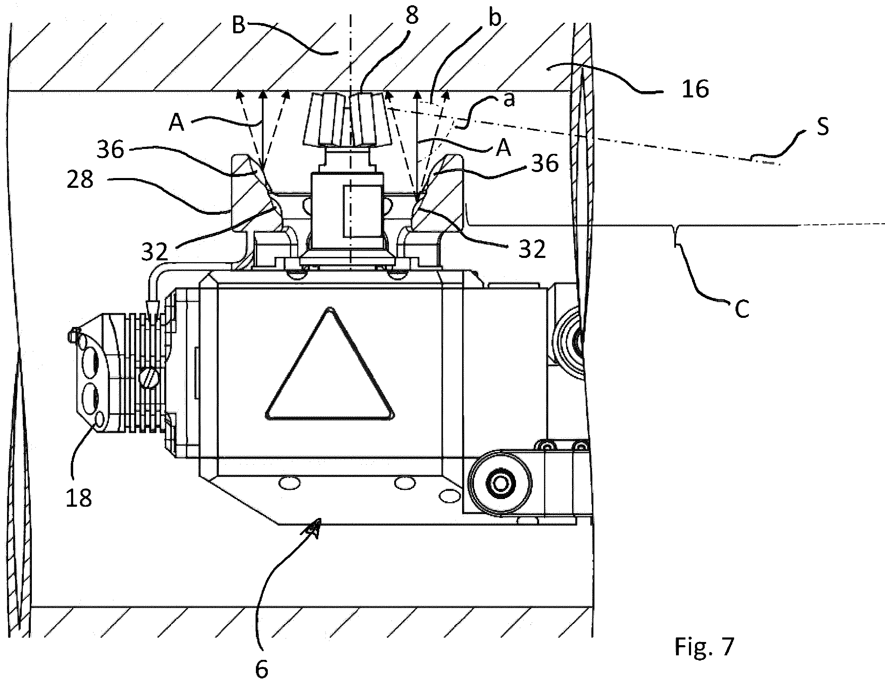

Neben der beschriebenen Ringleuchte 14 könnte die Werkzeug-Beleuchtungseinrichtung auch in anderer Weise ausgestaltet und insbesondere in der Nähe des Fräsers 8 angeordnet sein. So wäre es denkbar, Lichtquellen im Bereich des Fräser 8 zugewandten Endes der Positioniereinrichtung 4 anzuordnen. Eine alternative Ausgestaltung für die Ringleuchte 14 ist ferner in den Figuren 6 und 7 gezeigt.

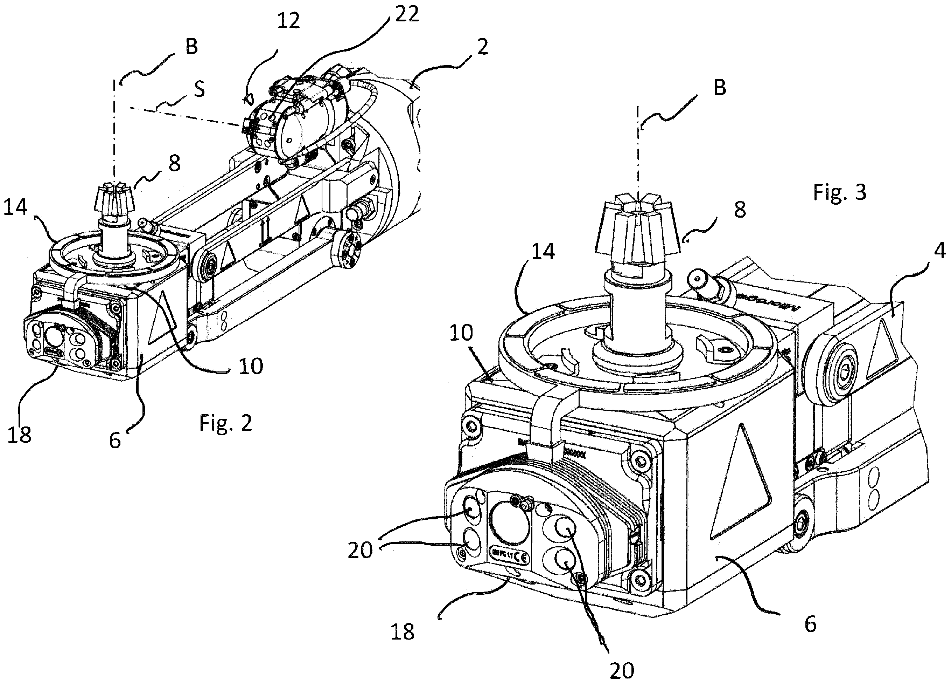

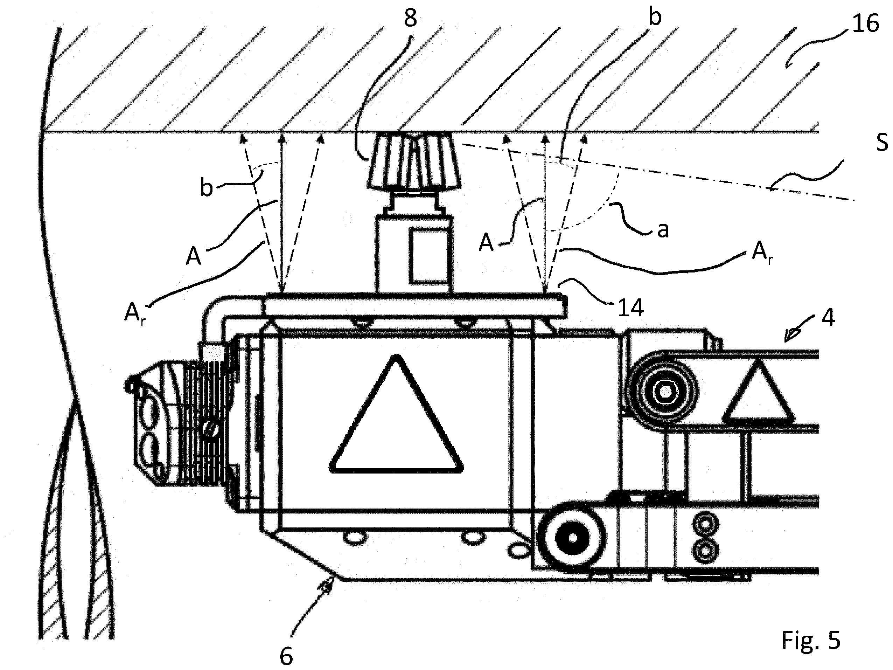

Die Werkzeug-Beleuchtungseinrichtung 26 gemäß der zweiten Ausführungsform weist einen im wesentlichen ringförmigen Beleuchtungsträger 28 auf, welcher hier aus zwei identischen Halbkreiselementen zusammengesetzt ist. Der Beleuchtungsträger 28 weist erste Lichtquellen 30 an seiner Oberseite auf, welche eine Hauptabstrahlrichtung ähnlich der Hauptabstrahlrichtung A der Ringleuchte 14 aufweisen. Der Beleuchtungsträger 28 weist ferner eine sich geneigt zur Bearbeitungsachse B erstreckende konische Innenwandung auf, an welcher zweite Lichtquellen 32 angeordnet sind. Der Beleuchtungsträger 28 weist ferner an seiner der Arbeitsbereich-Kamera 12 zugewandten Seite und an seiner der Arbeitsbereich-Kamera 12 abgewandten Seite einen in Richtung der Bearbeitungsachse B ausragenden Vorsprung 34 auf. An den der Bearbeitungsachse B zugewandten Innenseiten der Vorsprünge 34 ist jeweils eine dritte Lichtquelle 36 angeordnet, welche eine Hauptabstrahlrichtung aufweist, welche parallel zu den Hauptabstrahlrichtungen Ader zweiten Lichtquellen 32 verläuft. Auch in dieser zweiten Ausführungsform ist die Werkzeug-Beleuchtungseinrichtung 26 sehr nah an dem Fräser 8 angeordnet. Der Abstand ist auch bei diesem Ausführungsbeispiel ungefähr gleich wie der Abstand r im ersten Ausführungsbeispiel. Die Arbeitsbereich-Kamera 12 ist in dem zweiten Ausführungsbeispiel gemäß Figuren 6 und 7 genauso angeordnet, wie es in dem ersten Ausführungsbeispiel gemäß Figuren 1 bis 5 gezeigt und beschrieben wurde. Dadurch wird erreicht, dass auch bei der zweiten Ausführungsform der Bereich C zwischen der Arbeitsbereich-Kamera 12 und der Werkzeug-Beleuchtungseinrichtung 14 bzw. 26 im Wesentlichen unbeleuchtet bleibt, das heißt insbesondere nicht aus Richtung der Arbeitsbereich-Kamera 12 beleuchtet wird. So können in diesem im Wesentlichen unbeleuchteten Bereich C keine unerwünschten Reflektionen an Verunreinigungen oder Wasserpartikeln auftreten. Die Anordnung der Lichtquellen 30, 32 und 36 in der zweiten Ausführungsform hat gegenüber dem ersten Ausführungsbeispiel den Vorteil, dass die Lichtaustrittsflächen gegenüber der Horizontalen geneigt sind, so dass sich an diesen Verunreinigungen schlechter anlagern können. Ferner wird durch den Beleuchtungsträger 28 auch eine Streuung bzw. Abstrahlung des Lichtes in Richtung der Arbeitsbereich-Kamera 12 verringert.

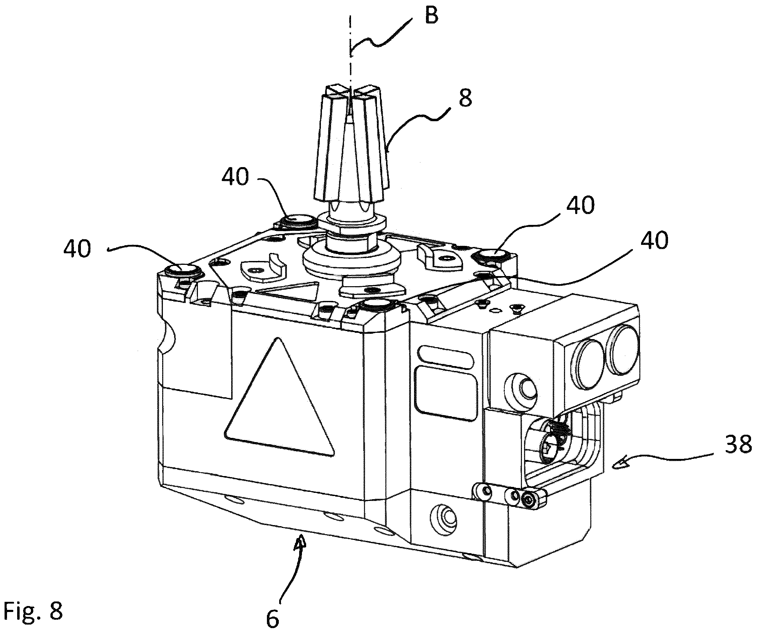

Die Figuren 8 bis 10 zeigen eine dritte beispielhafte Ausgestaltung eines Werkzeugträgers 6 mit einer weiteren Variante der Werkzeug-Beleuchtungseinrichtung. Der Werkzeugträger 6 weist an seinem rückseitigen Ende eine Schnittstelle 38 auf, welche zur Anbindung an einer Positioniereinrichtung 4 und an einen Fahrwagen 2 ausgebildet ist, wie es in den vorangehenden Ausführungsbeispielen gezeigt und beschrieben worden ist. Der Werkzeugträger 6 weist wie in den vorangehenden Ausführungsbeispielen einen Fräser 8 auf, welcher um die Bearbeitungsachse B rotierbar ist. In diesem dritten Ausführungsbeispiel weist die Werkezug-Beleuchtungseinrichtung 4 einzelne Lichtquellen 40 auf. Die vier Lichtquellen 40 sind an dem Werkzeugträger 6 an einer Oberseite bzw. Oberfläche angeordnet, von der ausgehend sich entlang der Bearbeitungsachse B der Fräser 8 erstreckt. Die vier Lichtquellen 40 sind dabei im Bereich der Ecken der Oberfläche des Werkzeugträgers 6 angeordnet, sodass sie in diesem Ausführungsbeispiel an den Eckpunkten eines Rechteckes, insbesondere eines Quadrates gelegen sind. So sind die vier Lichtquellen 40 jeweils im Wesentlichen gleich weit von der Bearbeitungsachse B und dem Fräser 8 beabstandet. Wenn der Werkzeugträger 6 wie in den vorangehenden Ausführungsbeispielen an der Positioniereinrichtung 4 fixiert ist, sind somit die Lichtquellen 40 deutlich näher zu dem Fräser 8 und dessen Bearbeitungsbereich gelegen, als die Arbeitsbereich-Kamera 12, welche auch bei diesem dritten Ausführungsbeispiel in der Weise angeordnet wäre, wie es vorangehend gezeigt und beschrieben wurde. Auf diese Weise ist eine direkte Anleuchtung des Arbeitsbereiches mit minimierten Reflektionen und Blendungen im Kamerabild möglich. Die Abstrahlrichtung der Lichtquellen 40 ist vorzugsweise mit der Hauptabstrahlrichtung A im Wesentlichen parallel zur Bearbeitungsachse B gerichtet. Alternativ könnten die Hauptabstrahlrichtungen A auch geneigt zu der Bearbeitungsachse B verlaufen, sodass die Abstrahlrichtung auf die Fräserspitze und den vor diesem liegenden Bearbeitungsbereich gerichtet ist. Die vier Lichtquellen 40 sind vorzugsweise von der Steuereinrichtung 24 oder einer anderen geeigneten Steuereinrichtung so ansteuerbar, dass sie einzeln ein- und ausgeschaltet und/oder in ihrer Helligkeit gesteuert bzw. reguliert werden können. So ist es beispielsweise möglich, die beiden Lichtquellen 40, welche bei der Beobachtung der Arbeitsbereich-Kamera 12 näher gelegen sind, zu dimmen bzw. auszuschalten und so die Blendung der Arbeitsbereich-Kamera 12 zu reduzieren. Über die weiter eingeschalteten Lichtquellen 40 wird der Bearbeitungsbereich vor dem Fräser 6 jedoch weiterhin ausreichend ausgeleuchtet.

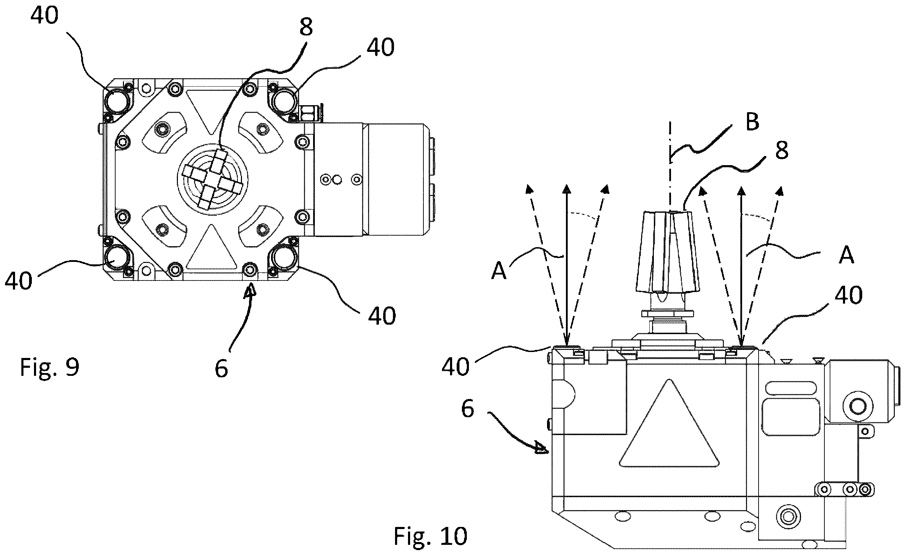

Die Lichtquellen 40 weisen jeweils eine plane Lichtaustrittsfläche auf, welche beispielsweise von einem Abdeckglas gebildet wird, hinter dem eine oder mehrere Leuchtdioden und ggf. eine Optik zur Strahlformung angeordnet sind. Die Lichtaustrittsflächen sind, wie insbesondere in Figur 10 zu sehen ist, plan und randlos ausgebildet, sodass kein umlaufender Rand bzw. keine vorstehende umlaufende Kante gebildet wird, innerhalb derer sich Verunreinigungen auf der Lichtaustrittsfläche anlagern könnten. Die Lichtaustrittsflächen der Lichtquellen 40 bilden vielmehr Erhebungen, von denen Verunreinigungen leicht abgespült werden können bzw. abfließen können.

### Bezugszeichenliste

- 2: Fahrwagen
- 4: Positioniereinrichtung
- 6: Werkzeugträger
- 8: Fräser
- 10: Außenseite
- 12: Arbeitsbereich-Kamera
- 14: Ringleuchte, Werkzeug-Beleuchtungseinrichtung
- 16: Kanalrohr
- 18: zweite Kamera
- 20: Beleuchtungseinrichtung
- 22: Kamera-Beleuchtungseinrichtung
- 24: Steuereinrichtung
- 26: Werkzeug-Beleuchtungseinrichtung
- 28: Beleuchtungsträger
- 30: Erste Lichtquellen
- 32: Zweite Lichtquellen
- 34: Vorsprünge
- 36: Dritte Lichtquellen
- 38: Schnittstelle
- 40: Lichtquelle
- B: Bearbeitungsachse
- C: Unbeleuchteter Bereich
- S: Blickrichtung
- A: Hauptabstrahlrichtung
- X: Vorschubrichtung
- r: Abstand zwischen Hauptabstrahlrichtung und Bearbeitungswerkzeug
- u: Abstand zwischen Arbeitsbereich-Kamera und Bearbeitungswerkzeug
- a: Winkel
- b: Abstrahlwinkel

## Patentansprüche

1. Kanalbearbeitungsvorrichtung mit zumindest einem Bearbeitungswerkzeug (8) sowie zumindest einer beabstandet zu dem Bearbeitungswerkzeug (8) angeordneten Arbeitsbereich-Kamera (12), **gekennzeichnet durch**
zumindest eine Werkzeug-Beleuchtungseinrichtung (14; 30; 32; 36; 40), welche einen Bearbeitungsbereich des Bearbeitungswerkzeuges (8) anleuchtet, wobei die Werkzeug-Beleuchtungseinrichtung (14; 30; 32; 36; 40) von dem Bearbeitungswerkzeug (8) weniger weit beabstandet angeordnet ist als von der Arbeitsbereich-Kamera (12).

2. Kanalbearbeitungsvorrichtung nach Anspruch 1, **dadurch gekennzeichnet, dass** die zumindest eine Werkzeug-Beleuchtungseinrichtung als eine das Bearbeitungswerkzeug (8) umgebenden Ringleuchte (14) ausgebildet ist oder mehrere über den Umfang des Bearbeitungswerkzeuges (8) verteilte Lichtquellen (30; 32; 26; 40) aufweist.

3. Kanalbearbeitungsvorrichtung nach Anspruch 1 oder 2, **dadurch gekennzeichnet, dass** die zumindest eine Werkzeug-Beleuchtungseinrichtung (14; 30; 32; 36; 40) mehrere gleichmäßig über den Umfang des Bearbeitungswerkzeuges (8) verteilte Lichtquellen (14; 30; 32; 36; 40) aufweist, vorzugsweise vier Lichtquellen (30; 40) aufweist.

4. Kanalbearbeitungsvorrichtung nach einem der vorangehenden Ansprüche, **dadurch gekennzeichnet, dass** die zumindest eine Werkzeug-Beleuchtungseinrichtung (14; 30; 32; 36; 40) mehrere gleichmäßig über den Umfang des Bearbeitungswerkzeuges (8) verteilte Lichtquellen (14; 30; 32; 36; 40) aufweist, welche einzeln oder in mehreren Gruppen steuerbar und vorzugsweise in ihrer Helligkeit steuerbar sind.

5. Kanalbearbeitungsvorrichtung nach einem der vorangehenden Ansprüche, **dadurch gekennzeichnet, dass** das Bearbeitungswerkzeug (8) an einem Werkzeugträger (6) angeordnet ist und dass die Werkzeug-Beleuchtungseinrichtung (14; 30; 32; 36; 40) an dem Werkzeugträger (6) angeordnet ist, wobei in dem Werkzeugträger (6) vorzugsweise ein Antrieb für das Bearbeitungswerkzeug (8) angeordnet ist.

6. Kanalbearbeitungsvorrichtung nach Anspruch 5, **dadurch gekennzeichnet, dass** die Werkzeug-Beleuchtungseinrichtung (14; 30; 40) an einer sich quer zu einer Bearbeitungsachse (B) des Bearbeitungswerkzeuges (8) erstreckenden Oberfläche des Werkzeugträgers (6) angeordnet ist.

7. Kanalbearbeitungsvorrichtung nach einem der vorangehenden Ansprüche, **dadurch gekennzeichnet, dass** die Werkzeug-Beleuchtungseinrichtung (14; 30; 32; 36; 40) zumindest eine Lichtaustrittsfläche aufweist, welche frei von einer über die Oberfläche der Lichtaustrittsfläche auskragenden Einfassung ist.

8. Kanalbearbeitungsvorrichtung nach einem der vorangehenden Ansprüche, **dadurch gekennzeichnet, dass** die Blickrichtung der zumindest einen Arbeitsbereich-Kamera (12) gegenüber einer Hauptabstrahlrichtung (A) der Werkzeug-Beleuchtungseinrichtung (14; 30; 40) gewinkelt ist, vorzugsweise in einem Winkel (a) zwischen 30° und 90°, weiter bevorzugt zwischen 45° und 90°.

9. Kanalbearbeitungsvorrichtung nach einem der vorangehenden Ansprüche, **dadurch gekennzeichnet, dass** das Bearbeitungswerkzeug ein Fräser (8) mit einer die Drehachse des Fräsers (8) definierenden Bearbeitungsachse (B) oder eine Hochdruckdüse mit einer die Hauptaustrittsrichtung definierenden Bearbeitungsachse (B) ist.

10. Kanalbearbeitungsvorrichtung nach einem der vorangehenden Ansprüche, **dadurch gekennzeichnet, dass** die zumindest eine Werkzeug-Beleuchtungseinrichtung im Umfangsbereich der Bearbeitungsachse (B) angeordnet ist und vorzugsweise in radialer Richtung von der Bearbeitungsachse (B) weniger als 15 cm, weiter bevorzugt weniger als 10 cm beabstandet ist.

11. Kanalbearbeitungsvorrichtung nach einem der vorangehenden Ansprüche, **dadurch gekennzeichnet, dass** die Werkzeug-Beleuchtungseinrichtung (14; 30; 40) eine Hauptabstrahlrichtung (A) aufweist, deren Winkel zu der Bearbeitungsachse (B) kleiner 45° und welche vorzugsweise parallel zu der Bearbeitungsachse (B) ist.

12. Kanalbearbeitungsvorrichtung nach einem der vorangehenden Ansprüche, **gekennzeichnet durch** eine Steuereinrichtung (24), welche mit der Werkzeug-Beleuchtungseinrichtung (14; 30; 32; 36; 40) zu deren Steuerung verbunden ist, wobei Steuereinrichtung (24) und Werkzeug-Beleuchtungseinrichtung (14; 30; 32; 36; 40) derart ausgestaltet sind, dass die Werkzeug-Beleuchtungseinrichtung (14; 30; 32; 36; 40) als Ganzes oder abschnittweise in ihrer Helligkeit einstellbar und/oder ein- und ausschaltbar ist.

13. Kanalbearbeitungsverfahren, bei welchem mit einem Bearbeitungswerkzeug (8) eine Bearbeitung im Inneren eines Kanalobjektes unter Kamerabeobachtung durchgeführt wird, **dadurch gekennzeichnet, dass**
bei der Bearbeitung ein Bearbeitungsbereich des Bearbeitungswerkzeuges (8) durch eine Werkzeug-Beleuchtungseinrichtung (14; 30; 32; 36; 40) beleuchtet wird, welche von dem Bearbeitungswerkzeug (8) weniger weit beabstandet angeordnet ist als von einer Arbeitsbereich-Kamera (12), mit der die Bearbeitung beobachtet wird.

14. Kanalbearbeitungsverfahren nach Anspruch 13, **dadurch gekennzeichnet, dass** der Bearbeitungsbereich durch zumindest eine Werkzeug-Beleuchtungseinrichtung in Form einer das Bearbeitungswerkzeug (8) umgebenden Ringleuchte (14) oder mehrerer über den Umfang des Bearbeitungswerkzeuges (8) verteilte Lichtquellen (30; 32; 36; 40) beleuchtet wird.

15. Kanalbearbeitungsverfahren nach Anspruch 13 oder 14, **dadurch gekennzeichnet, dass** die Blickrichtung (S), in welcher die Bearbeitung mittels der Arbeitsbereich-Kamera (12) beobachtet wird, gewinkelt ist gegenüber einer Hauptabstrahlrichtung (A), in derder Bearbeitungsbereich durch die Werkzeug-Beleuchtungseinrichtung (14; 30; 32; 36; 40) beleuchtet wird, vorzugsweise in einem Winkel (a) zwischen 30° und 45°, weiter bevorzugt zwischen 45° und 90°.
